(19) Europäisches Patentamt
European Patent Office
Office européen des brevets

(11) Veröffentlichungsnummer: **0 154 031**
**B1**

(12) **EUROPÄISCHE PATENTSCHRIFT**

(45) Veröffentlichungstag der Patentschrift: **01.03.89**

(51) Int. Cl.⁴: **D 06 B 3/02**, D 06 B 1/02

(21) Anmeldenummer: **84116210.0**

(22) Anmeldetag: **22.12.84**

(54) **Verfahren zum Schrumpffreimachen von Wollfasern und Vorrichtung zur Durchführung des Verfahrens.**

(30) Priorität: **02.02.84 DE 3403593**

(43) Veröffentlichungstag der Anmeldung: **11.09.85 Patentblatt 85/37**

(45) Bekanntmachung des Hinweises auf die Patenterteilung: **01.03.89 Patentblatt 89/9**

(84) Benannte Vertragsstaaten: **BE DE FR GB IT NL**

(56) Entgegenhaltungen:
**DE-A-2 031 475**
**FR-A-379 174**
**US-A-4 261 188**

(73) Patentinhaber: **FLEISSNER Maschinenfabrik AG, Balgacherstrasse/Feldstrasse, CH-9445 Rebstein (CH)**

(72) Erfinder: **Fleissner, Gerold, Aspermontstrasse 28, D-7006 Chur (DE)**

**EP 0 154 031 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich zunächst auf ein Verfahren zum Schrumpffestmachen von Wollfaserbändern in einer wäßrigen Lösung einer unterchlorigen Säure mit pH-Wert 2,0–3,0 und nachfolgendem Abquetschen, Waschen und Trocknen, wobei die Lösung beidseitig auf die Wollfaserbänder gegeben und diese in ein Bad aus dieser Lösung eingetaucht werden, und auf eine Vorrichtung zur Durchführung dieses Verfahrens.

Mit dem Verfahren und durch die Vorrichtung nach der Erfindung ist mit Vorteil die Wollfaser schrumpffest auszurüsten. Dies gilt damit nicht nur für Wollfaserbändern, sondern auch für jegliche Warenbahnen, in denen Wollfasern zumindest teilweise enthalten sind.

Wolle schrumpft und verfilzt in unbehandeltem Zustand beim Waschen in wäßriger Flotte. Um die Wolle filzfrei auszurüsten, sind chemische Behandlungen bekannt, bei denen die Struktur der Wolle verändert wird oder Ausrüstungen verwendet werden, welche Harz enthalten, das sich auf der Oberfläche der Wollfaser niederschlägt und diese umhüllt. Da diese Verfahren Griffveränderungen und eine wesentliche Beeinflussung der physikalischen Eigenschaften, wie Feuchtigkeitsaufnahme und Färbeverhalten zur Folge hat, ist das Chlor-Hercosett-Verfahren entwickelt worden, das in der Praxis weite Verbreitung gefunden hat. Dabei wird bei einer Vorbehandlung der Wolle in einer wäßrigen Chlor-Lösung die Oberflächen-Spannung der Wollfaser derart erhöht, daß im Anschluß daran auch ein wasserlösliches Harz ganz gleichmäßig die Wollfaser überzieht. Voraussetzung für ein filzfreies Verhalten ist jedoch eine gleichmäßige Chlorbehandlung.

Um eine gleichmäßige Chlorierung zu gewährleisten, werden Saugtrommelbäder eingesetzt, in denen eine Anzahl von Kammzugbändern gleichmäßig parallel zueinander ausgerichtet auf den von außen nach innen durchgeströmten Siebtrommeln aufliegen. Als Flotte dient verdünnnte Schwefelsäure und Natriumhypochlorid. Bei einem pH-Wert von ca. 1,5–2,0 und einer Behandlungsmitteltemperatur von 15–20 °C erhält dann das Bad im wesentlichen freies Chlor und die unterchlorige Säure HOCl, die die gewünschte Modifikation der Wollfaseroberfläche bewirkt.

Die Chlorierung in Siebtrommelbädern ist mit einigen Nachteilen behaftet. Einmal werden die auf der Siebtrommel liegenden Bänder durch den von innen wirksamen Saugzug verdichtet, was für leichte Wollqualitäten nachteilig sein kann, und weiterhin korrodieren die Bäder bei dem aggressiven Chlorgas, es sei denn, sie werden aus teuren Materialien gefertigt. Auch besteht bei Siebtrommelbädern die Gefahr der Verschmutzung durch Salze, Öl oder Schmälzen, die den gleichmäßigen Chlorierungseffekt negativ beeinflussen können (Textilveredlung 16, 1981, Nr. 2, Seiten 43–53).

Neben der Siebtrommelchlorierung ist durch die DE-OS 2 621 560 eine Vorrichtung bekannt geworden, die aus einem U-förmigen, 1 m hohen Behandlungsbehälter besteht, der unten eine Umlenkrolle aufweist. Die Wollfaserbänder werden außerhalb des Behälters beidseitig durch zwei gegenseitig verlaufende Transportbänder erfaßt und dann mit diesen lotrecht in das Bad bis zur 1 m tiefen Umlenkrolle abwärts und dann wieder aufwärts transportiert. Als Flotte wird in Wasser gelöstes Chlorgas verwendet. Die Vermischung des Chlorgases mit Wasser erfolgt in einem Injektor, wobei sich unterchlorige Säure gemäß folgender Reaktion bildet:

$$Cl_2 + H_2O = HOCl + HCl$$

Diese Flotte wird vor Eintritt der Bänder in das Bad beidseitig auf die durch die Transportbänder gehaltenen Wollfaserbänder mit Druck gesprüht. Die Bänder tauchen dann in die Flotte, in der die zwischen den Fasern eingeschlossenen Luftblasen aufsteigen und durch die Flotte ersetzt werden sollen. Die Badtemperatur muß für dieses Verfahren zwischen 8 und 10 °C liegen. Die Flotte muß also gekühlt werden. Diese Maßnahme ist notwendig einerseits deshalb, weil in dem Wasser sonst zu wenig Chlor gelöst werden würde, andererseits weil die Reaktion bei Umgebungstemperatur zu schnell erfolgen würde, was für die Gleichmäßigkeit des Chlorierungseffektes nachteilig sei.

Genauere Untersuchungen haben ergeben, daß die Gleichmäßigkeit der Chlorierung nicht abhängt von der langsamen Entgasung der Wollfaserbänder in der Chlorflotte. Im Gegenteil, falls Gasblasen mit den Fasern in die Tiefe des Bades gelangen und sich dort von den Fasern im tieferen Bad lösen, so erfolgt dort keine Chlorierung mit der verarmten Flotte mehr, so daß Flecken beim späteren Einfärben unvermeidlich sind. Es wurde festgestellt, daß der gewünschte Oberflächen-Chlorierungseffekt bei schnellem Angriff und nur beim ersten Kontakt der Faser mit der unterchlorigen Säure erfolgt. Gleich anschließend ist die Säure teilweise verbraucht, die Flotte ist verdünnt, so daß einerseits keine Gefahr eines zu hohen Angriffs der Wolle durch die Säure besteht, andererseits aber auch keine Vergleichmäßigung des Chlorierungseffektes bei längerem Kontakt der Wollfasern mit der Flotte entstehen kann.

Der Erfindung liegt die Aufgabe zugrunde, ein Verfahren und eine Vorrichtung zur Durchführung dieses Verfahrens zu entwickeln, bei dem gewährleistet ist, daß der Angriff der unterchlorigen Säure gleich zu Beginn des Kontaktes nur rundum an der Oberfläche und dort gleichmäßig über die Umfangsfläche jeder Wollfaser erfolgt.

Gelöst wird diese Aufgabe dadurch, daß die wäßrige Chlor-Lösung bei Umgebungstemperatur von etwa 10–25 °C mit einem x-fachen, wie 4–7-fachen, vorzugsweise 5-fachen Überschuß, bezogen auf das Gewicht der trockenen Faserbänder, mit diesen allseitig in Berührung gebracht wird und die Faserbänder unmittelbar anschließend, zusammen mit der aufgegebenen Übermenge an Flüssigkeit, durch einen Führungsspalt geführt, dabei vollständig genetzt und dann entlang eines

geringvolumigen Führungskanals im Gleichlauf mit der nachströmenden Chlor-Lösung fortlaufend zum Abquetschen transportiert werden.

Beim Verfahren nach der Erfindung ist mit Absicht die Temperatur der Flotte höher gesetzt als beim Verfahren nach dem Stand der Technik, wo die Flottentemperatur zwischen 8 und 10 °C liegen soll. Abgesehen davon, daß dazu eine ständige Kühlung der Flotte notwendig ist und damit Energie verbraucht wird, ist es nachteilig, daß die erste Reaktion der unterchlorigen Säure mit der Wollfaseroberfläche gedrosselt erfolgt. Durch die niedrige Temperatur von 8–10 °C nimmt zwar Wasser mehr Chlor auf, aber dieses greift auh die Wollfaser über die Zeit des Kontaktes stärker an. Der gewollte Angriff der Wollfaser stoppt nicht an der Oberfläche, sondern geht auch in tiefere Schichten der Faser vor. Bei Netzung der Faser mit der Flotte bei Umgebungstemperatur erfolgt zwar die Reaktion spontaner, aber auch im wesentlichen nur über die Umfangsfläche der Faser. Die inneren Regionen der Faser werden geschont. Voraussetzung für die Gleichmäßigkeit ist ein Überangebot an Flotte, damit jede Faser gleich zu Beginn der Behandlung rundum von der Flüssigkeit umspült ist. Es hat sich herausgestellt, daß ein Verhältnis 1:5, bezogen auf das Gewicht der trokkenen Faserbänder, optimal ist. Der größere Verbrauch von Wasser ist zwar nachteilig, er wird jedoch durch den nicht notwendigen Verbrauch von Energie zum Kühlen der Flotte aufgehoben. Vorteilhaft an der großen Flottenmenge ist jedoch die ständige intensive Spülung der Faserbänder in dem sich anschließenden Führungskanal, wo sich jetzt irgendwelche Ablagerungen nicht festsetzen können. Der Erfolg des neuen Verfahrens zeigt sich im verbesserten Griff der behandelten Wolle. Die Wolle ist bauschiger und weicher.

Ergebnis des Verfahrens nach der Erfindung ist es, daß die Reaktion der unterchlorigen Säure mit der Wollfaser nach 5–7 Sek. abgeschlossen ist, bevor also ein Verdünnungsvorgang in der Flotte eintritt. Der Oberflächen-Chlorierungseffekt an der Wollfaser ist eine Funktion der Geschwindigkeit des Reaktionsvorganges zusammen mit der Chlorkonzentration. Aus diesen Gründen ist im Verhältnis zum Stand der Technik die «hohe» Temperatur der Flotte vorteilhaft. Die bei dieser Temperatur entstehende Chlorgasmenge ist nicht von Nachteil. Dieses Chlorgas ist schwerer als Luft, es lagert sich oberhalb des Bades ab und kann leicht unterhalb des Deckels der ansonsten geschlossenen Vorrichtung abgesaugt werden. Ein weiterer Vorteil des Verfahrens nach der Erfindung besteht darin, daß gegenüber dem Stand der Technik die Wollfaserbänder beim Netzen mit der Behandlungsflotte rundum frei sind. Die Faserbänder brauchen beim Netzen mit der Chlor-Lösung unmittelbar oberhalb der engsten Stelle des Führungsspaltes seitlich nicht gehalten zu werden, so daß ein guter Zugang der Chlor-Lösung zu allen Fasern der Bänder gewährleistet ist. Im Führungsspalt werden die von der Flotte begleiteten Faserbänder gleichmäßig transportiert. Für das gleichmäßige Netzen der Wollfaserbänder mit der Behandlungsflotte ist es vorteilhaft, wenn diese nach der Chlorierung mit einem geeigneten Netzmittel vermischt wird. Diese Maßnahme ist zwar für sich grundsätzlich bekannt, jedoch in vorliegendem Fall mit Problemen behaftet, weil beim Vermischen des Wassers mit dem Chlorgas in den Injektoren infolge des Unterdrukkes Gasblasen in der Flotte entstehen, die beim Vermischen der Flotte mit dem Netzmittel zum Schäumen führen. Dieser Schaum ist selbstverständlich beim Netzen der Wollfaserbänder mit der Flotte nachteilig, weil dort kein Chlorierungseffekt entsteht, wo eine Gasblase ist. Um dies zu vermeiden, sollte die Flotte vorher entgast werden.

Die Vorrichtung zur Durchführung des Verfahrens nach der Erfindung besteht im wesentlichen aus einem allseitig geschlossenen Gehäuse mit einem Flüssigkeitsbad, in dem bis zu einem bestimmten Niveau Flotte enthalten ist. Das in diesem Gehäuse im wesentlichen zu erzielende Ergebnis besteht in einem schlagartigen und vollständigen Netzen der einlaufenden Wollfaserbänder mit der chlorierten Lösung. Dies erfolgt mittels eines Führungsspaltes, der durch ein angetrieben umlaufendes Quetschwalzenpaar gebildet ist, durch die die unmittelbar nebeneinander geführten Faserbänder zusammen mit der vorher aufgegebenen Flotte laufen. Der Quetschwalzenspalt ist dabei so zu bemessen, daß die im Überfluß aufgegebene Flotte ohne Lufteinschluß kontinuierlich mit den zulaufenden Wollfaserbändern vollständig durch den Spalt laufen kann. In der Praxis wird sich oberhalb des engsten Spaltes an dem Walzenpaar ein gewisser Flüssigkeitsstau bilden, der jedoch nicht zu einem Überlaufen führen sollte. Die im Überfluß in diesen Quetschwalzenspalt geführte, also nicht auf die Faserbänder direkt gesprühte Chlorlösung, wird in der aufgegebenen Menge zusammen mit den vollständig im Quetschwalzenspalt genetzten Wollfaserbändern durch den Spalt laufen und zusammen mit der jetzt schon an unterchloriger Säure verarmten Flotte durch den sich anschließenden Führungskanal laufen.

Um die gewünschte Netzung sämtlicher Wollfasern eines Wollfaserbandes im Quetschwalzenspalt oder bereits unmittelbar vorher zu gewährleisten, dürfen die Wollfaserbänder nicht im Sinne eines Entwässerns in diesem Spalt gequetscht werden, vielmehr sollten die Fasern im Quetschwalzenspalt gerade so zusammengeführt werden, daß eventuell in ihnen enthaltene Luft hinausgedrückt und durch die Flotte ersetzt wird. Allein hier in diesem Bereich ist eine sofortige Netzung der Wollfasern durch die Flotte notwendig. Dies ist erreicht, wenn der Quetschwalzenspalt etwa eine Weite von 5 mm aufweist und die Flüssigkeit mit einem fünffachen Überschuß gegenüber den trokkenen Wollfaserbändern dem Quetschwalzenspalt zugeführt wird. Diese Angaben können variieren in Abhängigkeit der Dicke der Faserbänder. In diesem Beispiel wird mit einem Gewicht eines Wollfaserbandes von 25 g/m laufendes Band gefahren.

Der sich an diesen Führungsspalt anschließende Führungskanal kann beliebiger Konstruktion sein. Voraussetzung ist lediglich, daß die Wollfaserbänder insgesamt kontinuierlich durch diesen Kanal gefördert werden, damit es nicht zu einem Faserverlust und einem ev. daraufhin erfolgenden Stau von Faserbändern kommt. Die Wollfaserbänder werden begleitet von der vorher eingefüllten Chlor-Lösung, und zwar sollten die Geschwindigkeiten beider Medien gleich groß sein, ev. sollte die Flüssigkeit noch schneller fließen, als der Transport der Wollfasern eingestellt ist. Innerhalb des Führungskanals erfolgt ein gewisser Waschvorgang, der besonders durch das hohe Flottenangebot intensiviert wird. Als Führungskanal hat sich eine Reihe von nebeneinander angeordneten, angetrieben umlaufenden Walzen bewährt, die von den Wollfaserbändern mäanderförmig umlaufen sind. Um einen gleichbleibenden Fluß der aufgegebenen Flotte durch diesen Führungskanal zu gewährleisten, sollte dessen Querschnitt gering sein. Deshalb sind bei der Vorrichtung nach der Erfindung den Walzen Verdrängungskörper ober- und unterhalb zugeordnet, die nur dort einen Spalt frei lassen, wo der aktive Transport die Wollfasern vorgesehen ist, ansonsten aber dicht an den Walzen enden.

Wesentlich für eine erfolgreiche Netzung der Wollfasern gleich zu Beginn des Netzungsvorganges ist eine luft- bzw. blasenfreie Zuführung der eine schnelle Netzung bewirkenden Flotte. Dies gilt ganz allgemein, gleichgültig welche Vorrichtung die Netzung bewirkt. Um dies zu erreichen, ist die Flotte zunächst mit einem Netzmittel zu vermischen. Damit dieses jedoch ohne Schaumbildung erfolgen kann, ist die mit dem Chlorgas vermischte und dabei mit Gasblasen versehene Chlor-Lösung zu entgasen, was durch ein nach oben hin offenes, mit einem Zu- und einem Abfluß versehenen Standrohr erfolgt, wobei der Abfluß mit Abstand unterhalb des Zuflusses angeordnet ist.

In der Zeichnung ist ein Ausführungsbeispiel der Vorrichtung nach der Erfindung dargestellt. Anhand diesem sollen noch weitere erfinderische Details erläutert werden, die auch in Kombination mit anderen Merkmalen von erfinderischer Bedeutung sind. Es zeigen:

Figur 1 einen Schnitt längs eines Behandlungsbades,

Figur 2 die Draufsicht auf das am Einlauf des Behandlungsbades angeordnete Quetschwalzenpaar und

Figur 3 in schematischer Darstellung die der Sprüheinrichtung vorgeordnete Chlorierungs- und Entgasungseinrichtung.

Die Vorrichtung zum Schrumpffestmachen von Wollfaserbändern, d.h. zum vollständigen Netzen der Bänder mit einer unterchlorigen Säure, also ohne die sich anschließende Einrichtung zum Aufgeben des Harzes, besteht aus dem allseitig geschlossenen Gehäuse 1, das im oberen aufklappbaren Deckel 2 einen Einlaufschlitz 4′ für die zuzuführenden Faserbänder 3 und einen Auslaufschlitz 4″ für die chlorierten Faserbänder aufweist. Die Faserbänder sind dicht nebeneinander angeordnet und bilden ein hier nur in der Seitenansicht dargestelltes bahnförmiges Vlies. Auf dem Boden des Gehäuses 1 ist ein aus Kunststoff gefertigtes Bad 5 angeordnet, das bis zu einem Niveau 6 mit einer Flotte angefüllt ist. In muldenförmigen Ausnehmungen 7, 8 des Bades 5 sind drei Umlenkwalzen 9 nebeneinander angeordnet und zum kontinuierlichen Transport der Wollfaserbänder 3 durch die Flüssigkeit angetrieben. Oberhalb der dritten Umlenkwalze 9 werden die Faserbänder 3 über eine Führungswalze 10 einem Preßwalzenpaar 11 zugeführt, von dem die entwässerten Wollfaserbänder 3 aus dem Gehäuse 1 durch den Auslaufschlitz 4″ abtransportiert werden. Die verbrauchte Flüssigkeit fließt über den Überlauf 35 in den Abfluß 36.

Der wesentliche Teil der Vorrichtung zur Durchführung der Chlorierung ist unterhalb des Einlaufschlitzes 4′ angeordnet. Er besteht aus einer Art Quetschwalzenpaar 12, das lotrecht unterhalb des Einlaufschlitzes 4′ mit seinen Achsen um das Maß x zur Gewährleistung eines beginnenden Kontaktes der Fasern nur mit unverbrauchter Flotte ein wenig höher (1–2 cm) als das Niveau 6 angeordnet ist und dem unmittelbar darüber die Arbeitsbreite auf beiden Seiten der zugeführten Wollfaserbahn 3 Sprüheinrichtungen zugeordnet sind. Die Sprüheinrichtungen bestehen aus parallel der Warenbahn und oberhalb des Quetschwalzenpaares 12 angeordneten Rohre 13, 14, deren Sprühöffnungen auf je ein darunter angeordnetes Prallblech 15, 16 gerichtet sind, die die darauf gleichmäßig sich verteilende Flüssigkeit in den Walzenspalt 12′ leiten. Die von den Prallblechen 15, 16 ablfießende Flüssigkeitsschicht ist also nicht gegen die Wollfaserbänder 3 direkt, sondern mehr auf die Walzen 10, 18 des Quetschwalzenpaares 12 gerichtet, so daß eine Netzung der Wollfaserbänder 3 erst unmittelbar vor Erreichen des Walzenspaltes 12′ erfolgt. In der Praxis wird sich oberhalb der engsten Stelle 12′ des Quetschwalzenpaares 12 ein Flüssigkeitsstau bilden, wobei dieser jedoch nicht zu einem Überlaufen oberhalb der Walzen 17, 18 des Quetschwalzenpaares 12 führen sollte.

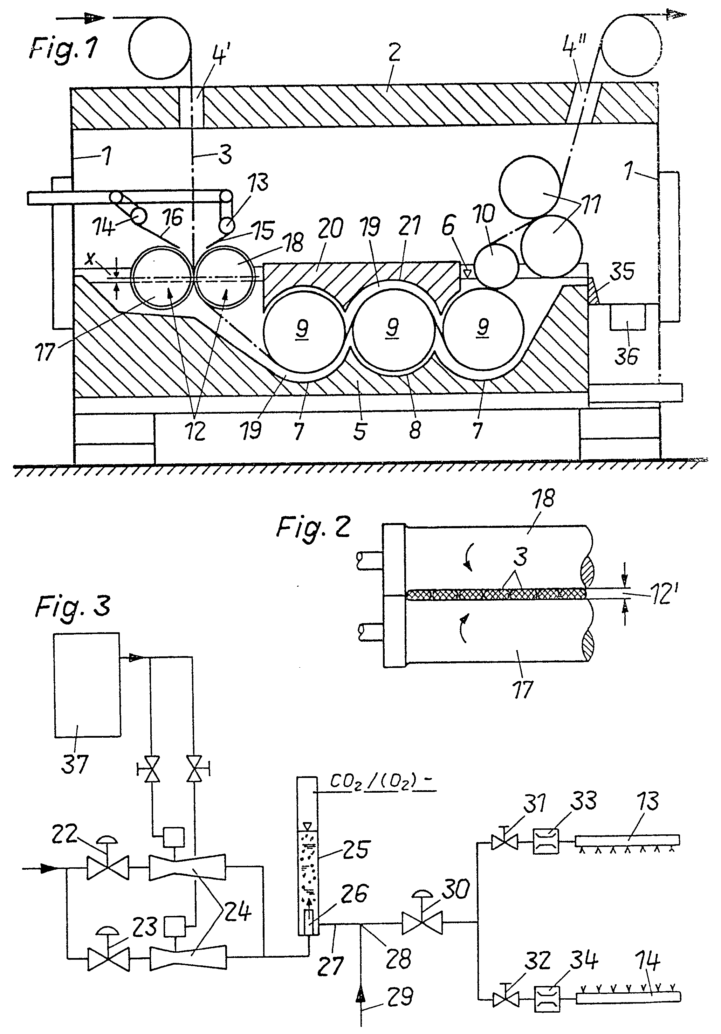

Das Querschwalzenpaar 12 besteht aus zwei entgegen umlaufenden Walzen 17, 18, die in der Figur 2 in der Draufsicht dargestellt sind. Sie weisen über ihre Arbeitsbreite eine Ringnut auf, derart, daß ein Walzenspalt 12′ von 3–7 mm einstellbar ist. In diesem Walzenspalt 12′ sind die Wollfaserbänder 3, in Fig. 3 von oben gesehen dicht nebeneinander angeordnet. Falls noch Luftblasen zwischen den Fasern der Wollfaserbänder 3 an den Fasern haften sollten, so werden diese spätestens in diesem sich verengenden Spalt 12′ herausgedrückt und durch die Flüssigkeit ersetzt werden. Diese Art der Netzung ist nicht mit einem Zwickelfoulard zu verwechseln. Dort wird die vom Gut aufgesaugte Flüssigkeit optimal abgequetscht, während hier ein Quetschen nur bezüglich der zu entfernenden Luft erfolgt. Die Flüssigkeit soll voll die Faserbänder 3 begleiten.

Die Wollfaserbänder 3 werden nunmehr von der im Überfluss angebotenen Flüssigkeit durch den

Führungskanal 19 laufen. Die bereits jetzt an unterchloriger Säure verarmte Flotte wird die Wollfaserbänder 3 im Gleichlauf, ev. sogar schneller als diese, um die Unterseite der ersten Umlenkwalze 9 begleiten, um mäanderförmig den Rest der Umlenkwalzen 9 zu umströmen. Der dadurch gebildete Führungskanal 19 kann auch völlig entfallen oder nur durch eine Umlenkwalze 9 ersetzt werden. Da die Chlorierung im wesentlichen im Bereich des Quetschwalzenpaares 12 erfolgt, ist der Führungskanal 19 und die dabei erfolgende Umspülung der Wollfasern mit der Flüssigkeit im wesentlichen nur für einen Reinigungsvorgang vorteilhaft. Hier findet ein Waschen statt, das das Absetzen von anorganischen Salzen, von Ölen und von Schmälzen verhindert.

Damit der Führungskanal 19 nur gerade so groß ist, daß die durch die Sprüheinrichtung 13, 14 aufgegebene Flüssigkeitsmenge abtransportiert werden kann, sind den Umlenkwalzen 9 sowohl auf der Ober- als auf der Unterseite Verdrängungskörper 5, 20 zugeordnet. Diese Verdrängungskörper 5, 20 lassen lediglich den Warenführungskanal 19 frei, wozu auf der Unterseite die Mulden 7 und auf der Oberseite die ringförmige Ausnehmung 21 in den Verdrängungskörpern 5, 20 vorgesehen sind. Im übrigen enden die Verdrängungskörper ziemlich dicht an den Umlenkwalzen 9. Es kann zweckmäßig sein, den Führungskanal 19 um die jeweilige Umlenkwalze 9 konisch, also am jeweiligen Einlauf breiter auszubilden als am Auslauf, um einen ev. Stau von Wollfasern im Bereich des Wechsels von der einen auf die andere Umlenkwalze 9 zu vermeiden.

Die den Sprührohren 13, 14 zugeführte Flotte wird in einer Mischstation, die in der Fig. 3 nur teilweise dargestellt ist, vorbereitet. Dazu wird Wasser unter hohem Druck über die Schließventile 22, 23 zwei Venturidüsen 24 zugeführt, in deren engsten Stelle das aus dem Behälter 37 zufließende Chlorgas zugeführt ist. Zwei derartige Injektoren 24 sind vorteilhaft, um die Flüssigkeitsmenge dem jeweiligen Verbrauch anzupassen. Ein Injektor ist auf eine bestimmte Wassermenge geeicht. Mit zwei Injektoren 24 können also mehrere Leistungsstufen bei der Chlorierung im Gehäuse 1 eingestellt werden. Aufgrund der hohen Geschwindigkeit des Wassers bildet sich in der jeweiligen Düse ein Unterdruck, der das Gas ansaugt und mit dem Wasser vermischt. Bei dieser sehr einfachen und dauerhaft sicheren Art des Mischvorganges bilden sich aber Gasblasen in der Flotte, die vor dem Zugeben eines Netzmittels entfernt werden müssen. Im Anschluß an die Injektoren 24 ist deshalb in der Zuführleitung ein Standrohr 25 zwischengeschaltet, das nach oben hin offen ist und mit einem Zu- und einem Abfluß versehen ist. Der Abfluß 27 ist dabei mit Abstand unterhalb des Zuflusses 26 vorgesehen, so daß die durch den Zufluß zufließende Flüssigkeit sich zuerst entgasen muß, bevor sie der Stelle 28 zufließt, an der das Netzmittel 29 zugegeben wird. Das sich im Standrohr 25 oben ansammelnde Gas kann aus Sicherheitsgründen durch einen nicht dargestellten Schlauch in das Gehäuse 1 geleitet werden, wo bereits eine Absaugung wegen des dort aufsteigenden Chlorgases arbeitet.

Durch weitere Ventile 30–32 und Mischvorrichtungen (Rotameter) 33–34 fließt dann die somit gut vorbereitete Flotte den Sprührohren 13, 14 zu.

Es ist ein wesentliches Merkmal des Verfahrens nach der Erfindung und der zur Durchführung des Verfahrens vorgesehenen Vorrichtung, daß Wasser mit einem Überfluß, nämlich bis zu 7-fach gegenüber dem Gewicht der Faserbänder diesen zugeführt wird. Bei der Mischung des Chlorgases mit dem Überangebot an Wasser ist dieses jedoch noch nicht verbraucht, vielmehr kann es nach Abschluß der Behandlung über den Abfluß 36 einem Filter zugeführt, dort gereinigt und dann dem Behandlungsvorgang wieder zugeführt werden. Die Zuführung der Menge des wieder verwendbaren Wassers erfolgt zweckmäßigerweise vor den Schließventilen 22, 23.

## Patentansprüche

1. Verfahren zum Schrumpffestmachen von Wollfaserbändern in einer wäßrigen Lösung einer unterchlorigen Säure mit pH-Wert 2,0–3,0 und nachfolgendem Abquetschen, Waschen und Trocknen, wobei die Lösung beidseitig auf die Wollfaserbänder gegeben und diese in ein Bad aus dieser Lösung eingetaucht werden, dadurch gekennzeichnet, daß die wäßrige Chlor-Lösung bei Umgebungstemperatur von etwa 10–25 °C mit einem x-fachen, wie 4–7-fachen, vorzugsweise 5-fachen Überschuss, bezogen auf das Gewicht der trockenen Faserbänder, mit diesen allseitig in Berührung gebracht wird und die Faserbänder unmittelbar anschließend, zusammen mit der aufgegebenen Übermenge an Flüssigkeit, durch einen Führungsspalt geführt, dabei vollständig genetzt und dann entlang eines geringvolumigen Führungskanals im Gleichlauf mit der nachströmenden Chlorlösung fortlaufend zum Abquetschen transportiert werden.

2. Verfahren nach Anspruch 1, dadurch gekennzeichnet, daß die Wollfaserbänder allseitig frei mit der Chlor-Lösung in Berührung gebracht werden.

3. Verfahren nach Anspruch 1 oder 2, dadurch gekennzeichnet, daß im Führungsspalt die Wollfaserbänder aktiv transportiert werden.

4. Verfahren nach Anspruch 1 bis 3, dadurch gekennzeichnet, daß die Faserbänder nach dem Führungsspalt im wesentlichen horizontal transportiert werden.

5. Verfahren nach Anspruch 1 bis 4, dadurch gekennzeichnet, daß die aufgegebene wäßrige Chlor-Lösung vor dem Auftrag mit einem Netzmittel vermischt wird.

6. Verfahren, insbesondere nach Anspruch 5, dadurch gekennzeichnet, daß die wäßrige Chlor-Lösung vor dem Vermischen mit dem Netzmittel von ev. vorhandenen Gasblasen getrennt wird.

7. Vorrichtung zum Schrumpffestmachen von Wollfaserbändern mit einem Flüssigkeitsbehälter, der bis zu einem Niveau mit der wäßrigen Chlor-Lösung gefüllt ist und am Einlauf oberhalb des Niveaus auf beiden Seiten der einzutauchenden

Wollfaserbänder auf diese zu gerichtete Sprüheinrichtungen aufweist, dadurch gekennzeichnet, daß unmittelbar unterhalb der Sprüheinrichtungen (13–16) in Höhe des Niveaus (6) ein gegenläufiges, angetrieben umlaufendes Quetschwalzenpaar (12) für die unmittelbar nebeneinander geführten Faserbänder (3) angeordnet ist, dem sich ein Führungskanal (19) mit fortlaufendem Transport der Faserbänder (3) zur Entwässerungsvorrichtung (11) anschließt.

8. Vorrichtung nach Anspruch 7, dadurch gekennzeichnet, daß zumindest eine der Walzen (17, 18) des Quetschwalzenpaares (12) zum Durchtritt der Wollfaserbänder (3), einschließlich der zugeführten Chlor-Lösung, eine Ringnut über die Arbeitsbreite aufweist.

9. Vorrichtung nach Anspruch 8, dadurch gekennzeichnet, daß der Quetschwalzenspalt (12') eine Weite zwischen 3 und 7 mm, vorzugsweise 5 mm, bei einem Wollfaserband von 25 g/m aufweist.

10. Vorrichtung nach Anspruch 7, dadurch gekennzeichnet, daß die Achsen der Quetschwalzen (17, 18) mit Abstand (x) oberhalb des Niveaus (6) im Flüssigkeitsbehälter (1) angeordnet sind.

11. Vorrichtung nach Anspruch 7, dadurch gekennzeichnet, daß die Sprüheinrichtungen (13, 14), vorzugsweise gegen die Sprühstrahlen gerichtete Prallbleche (15, 16), in den Zwickel zwischen den Walzen (17, 18) gerichtet sind.

12. Vorrichtung nach Anspruch 7, dadurch gekennzeichnet, daß sich der nachgeordnete Führungskanal (19) im wesentlichen horizontal erstreckt.

13. Vorrichtung nach Anspruch 12, dadurch gekennzeichnet, daß der Führungskanal (19) aus mindestens einer, vorzugsweise drei, unterhalb des Niveaus (6) in einer Reihe nebeneinander angeordneten, angetrieben umlaufenden Walzen (9) besteht, die von den Wollfaserbändern (3) mäanderförmig umlaufen und denen Verdrängungskörper (5, 20) ober- und unterhalb zugeordnet sind, die mit einem der Warenführung entsprechenden Warenführungsspalt (19) entweder im Bereich der unteren oder oberen Hälfte der jeweiligen Walze (9), ansonsten aber dicht an den Walzen (9) enden.

14. Vorrichtung, insbesondere nach Anspruch 7, dadurch gekennzeichnet, daß den Sprüheinrichtungen (13–16) eine Einrichtung (25–27) zum Entgasen der Flüssigkeit vorgeordnet ist.

15. Vorrichtung nach Anspruch 14, dadurch gekennzeichnet, daß die Einrichtung zum Entgasen aus einem nach oben hin offenen, mit einem Zu- und einem Abfluß versehenen Standrohr (25) besteht, wobei der Abfluß (27) mit Abstand unterhalb des Zuflusses (26) angeordnet ist.

**Claims**

1. Method of shrink-fixing strips of wool fibre in an aqueous solution of a hypochlorous acid with a pH value of 2.0–3.0 and subsequent squeezing, washing and drying, the solution being applied to both sides of the strips of wool fibre and these strips being immersed in a bath of this solution, characterised in that an excess amount of aqueous chlorine solution totalling x-times, such as 4- to 7-times and preferably 5-times, the weight of the strips of dry fibre is brought into total contact with the latter at an ambient temperature of approximately 10–25 °C, and the strips of fibre, together with the excess amount of fluid added thereto, are then immediately conducted through a guide slot, they are thus completely soaked, and then they are continuously conveyed along a low-volume guide channel in synchronism with the downstream flowing chlorine solution for the squeezing process.

2. Method according to claim 1, characterised in that the strips of wool fibre are freely brought into total contact with the chlorine solution.

3. Method according to claim 1 or 2, characterised in that the strips of wool fibre are actively conveyed in the guide slot.

4. Method according to claims 1 to 3, characterised in that the strips of fibre are conveyed substantially horizontally downstream of the guide slot.

5. Method according to claims 1 to 4, characterised in that the aqueous chlorine solution which is added is mixed with a wetting agent prior to being applied.

6. Method, more especially according to claim 5, characterised in that the aqueous chlorine solution is separated from any gas bubbles which may be present prior to being with the wetting agent.

7. Apparatus for shrink-fixing strips of wool fibre, comprising a container for fluids which is filled with the aqueous chlorine solution up to a (predetermined) level and is provided, at the inlet above the level on both sides of the strips of wool fibre to be immersed, with spraying means which are directed towards the latter, characterised in that there is disposed immediately beneath the spraying means (13–16), at the height of level (6), a contrarotatably driven pair of squeeze rollers (12) for the strips of fibre (3) which are conducted immediately adjacent one another, a guide channel (19) communicating with the pair of squeeze rollers to convey the strips of fibre (3) continuously to the water-extracting device (11).

8. Apparatus according to claim 7, characterised in that at least one of the rollers (17, 18) of the pair of squeeze rollers (12) has an annular groove extending over its working width for the conveyance of the strips of wool fibre (3), including the chlorine solution which has been added.

9. Apparatus according to claim 8, characterised in that the squeeze gap (12') has a width of between 3 and 7 mm, preferably 5 mm, with a strip of wool fibre of 25 g/m.

10. Apparatus according to claim 7, characterised in that the axes of the squeeze rollers (17, 18) are disposed at a spacing (x) above the level (6) in the fluid container (1).

11. Apparatus according to claim 7, characterised in that the spraying means (13, 14) preferably baffle plates (15, 16) which are directed towards the spray jets, are directed into the nip between the rollers (17, 18).

12. Apparatus according to claim 7, characterised in that the guide channel (19) which is disposed downstream, extends substantially horizontally.

13. Apparatus according to claim 12, characterised in that the guide channel (19) comprises at least one, preferably three, rotatably driven rollers (9) which are disposed adjacent one another in a row below the (predetermined) level (6) and have the strips of wool fibre (3) looped thereаround in a serpentine-like manner, displacement bodies (5, 20) being associated with the rollers above and below such and terminating, with a goods guide slot (19) corresponding to the goods guide, either in the region of the lower or upper half of the respective roller (9), but otherwise close to the rollers (9).

14. Apparatus, more especially according to claim 7, characterised in that an arrangement (25–27) for degassing the fluid is provided upstream of the spraying means (13–16).

15. Apparatus according to claim 14, characterised in that the arrangement for degassing comprises a standpipe (25), which is open towards its upper end and is provided with an inlet and an outlet, the outlet (27) being disposed at a spacing below the inlet (26).

**Revendications**

1. Procédé en vue de rendre irrétrécissables des bandes de fibres de laine dans une solution aqueuse d'un acide hypochloreux d'un pH de 2,0–3,0 avec exprimage, lavage et séchage ultérieurs, cette solution étant appliquée de part et d'autre sur les bandes de fibres de laine et celles-ci étant plongées dans un bain constitué de cette solution, caractérisé en ce que la solution aqueuse de chlore est mise en contact de toutes parts avec les bandes de fibres sèches à une température ambiante d'environ 10 à 25 °C avec un excès de x-fois, par exemple, 4–7 fois, de préférence, 5 fois calculé sur le poids des bandes de fibres sèches, lesquelles sont ensuite guidées, conjointement avec la quantité excédentaire chargée de liquide à travers un espace de guidage, pour être ainsi complètement humidifiées et être ensuite transportées continuellement pour l'exprimage le long d'un canal de guidage de faible volume en synchronisme avec la solution de chlore s'écoulant ultérieurement.

2. Procédé selon la revendication 1, caractérisé en ce que les bandes de fibres de laine sont mises de toutes parts librement en contact avec la solution de chlore.

3. Procédé selon la revendication 1 ou 2, caractérisé en ce que les bandes de fibres de laine sont transportées activement dans l'espace de guidage.

4. Procédé selon les revendications 1 à 3, caractérisé en ce que, après l'espace de guidage, les bandes de fibres sont transportées essentiellement dans le sens horizontal.

5. Procédé selon les revendications 1 à 4, caractérisé en ce que, avant l'application, la solution aqueuse de chlore chargée est mélangée avec un agent mouillant.

6. Procédé, en particulier selon la revendication 5, caractérisé en ce que, avant le mélange avec l'agent mouillant, la solution aqueuse de chlore est séparée des bulles de gaz éventuellement présentes.

7. Dispositif en vue de rendre irrétrécissables des bandes de fibres de laine, ce dispositif comportant un récipient de liquide qui est rempli, jusqu'à un certain niveau de la solution aqueuse de chlore et qui, à l'entrée se situant au-dessus de ce niveau et de part et d'autre des bandes de fibres de laine devant être immergées, comporte des dispositifs de pulvérisation dirigés vers ces dernières, caractérisé en ce que, directement en dessous des dispositifs de pulvérisation (13–16), à hauteur du niveau (6), est disposée une paire de cylindres essoreurs (12) rotatifs entraînés dans des sens opposés pour les bandes de fibres (3) guidées directement l'une à côté de l'autre, cette paire de cylindres essoreurs étant raccordée à un canal de guidage (19) assurant le transport continu des bandes de fibres (3) vers le dispositif de déshydratation (11).

8. Dispositif selon la revendication 7, caractérisé en ce qu'au moins un des cylindres (17, 18) de la paire de cylindres essoreurs (12) comporte, pour le passage des bandes de fibres de laine (3), y compris de la solution de chlore acheminée, une rainure annulaire sur la largeur de travail.

9. Dispositif selon la revendication 8, caractérisé en ce que l'écartement (12′) entre les cylindres essoreurs a une largeur se situant entre 3 et 7 mm, de préférence, une largeur de 5 mm, pour une bande de fibres de laine de 25 g/m.

10. Dispositif selon la revendication 7, caractérisé en ce que les axes des cylindres essoreurs (17, 18) sont disposés à une distance (x) au-dessus du niveau (6) dans le récipient de liquide (1).

11. Dispositif selon la revendication 7, caractérisé en ce que les dispositifs de pulvérisation (13, 14), de préférence, des chicanes (15, 16) dirigées à l'encontre des jets de pulvérisation, sont orientés dans l'espace formé entre les cylindres (17, 18).

12. Dispositif selon la revendication 7, caractérisé en ce que le canal de guidage ultérieur (19) s'étent essentiellement dans le sens horizontal.

13. Dispositif selon la revendication 12, caractérisé en ce que le canal de guidage (19) est constitué d'au moins un, de préférence, de trois cylindres (9) entraînés et juxtaposés en une rangée en dessous du niveau (6), sur lesquels les bandes de fibres de laine (3) décrivent des méandres et au-dessus et en dessous desquels sont attribués des corps de déplacement (5, 20) qui se terminent par un espace de guidage (19) d'articles correspondant au guidage des articles soit dans la zone de la moitié inférieure, soit dans la zone de la moitié supérieure de chaque cylindre (9) mais, par ailleurs, juste sur le cylindre (9).

14. Dispositif, en particulier, selon la revendication 7, caractérisé en ce que les dispositifs de pulvérisation (13–16) sont précédés d'un dispositif (25–27) assurant le dégazage du liquide.

15. Dispositif selon la revendication 14, caractérisé en ce que le dispositif de dégazage est constitué d'une colonne montante ouverte vers le haut (25) pourvue d'une admission et d'une évacuation, l'évacuation (27) étant disposée à l'écart en dessous de l'admission (26).

Fig. 1

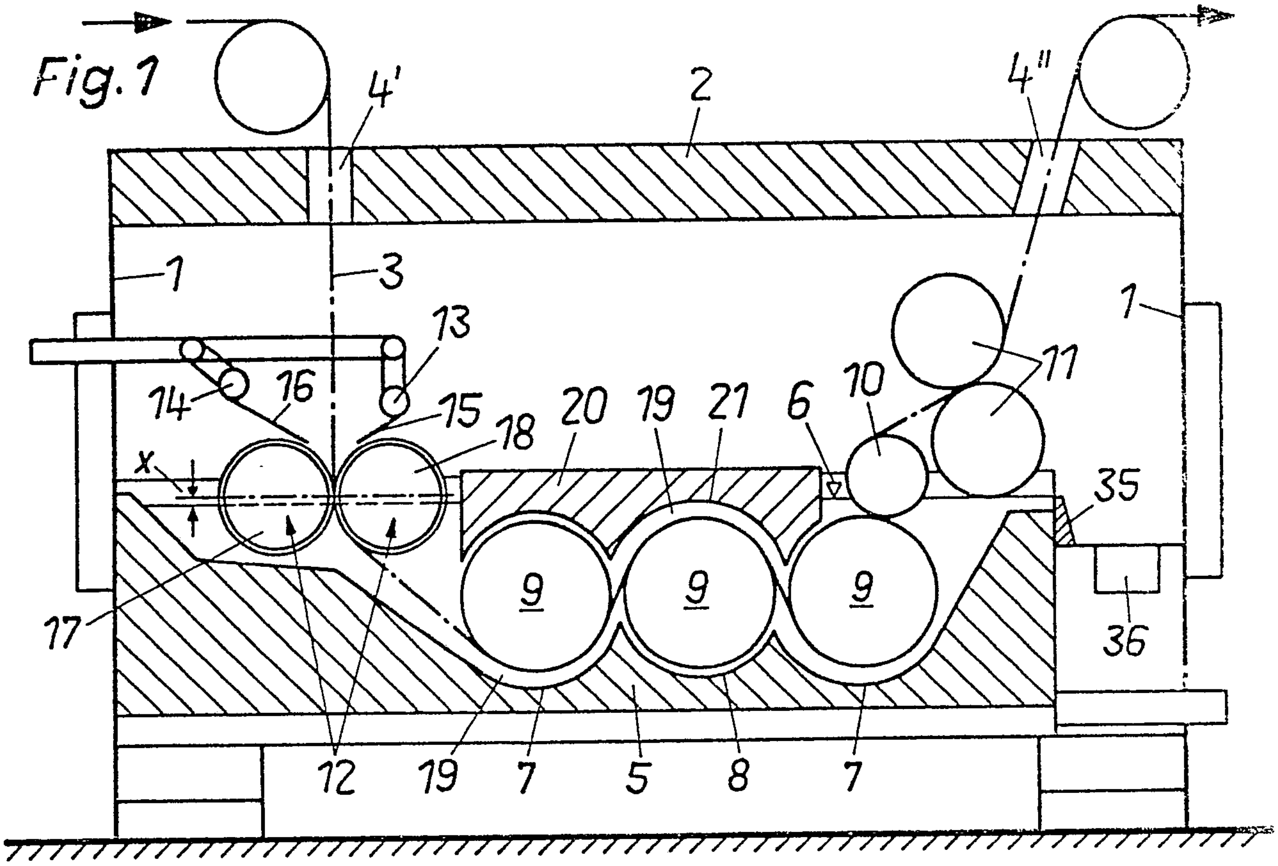


Fig. 2

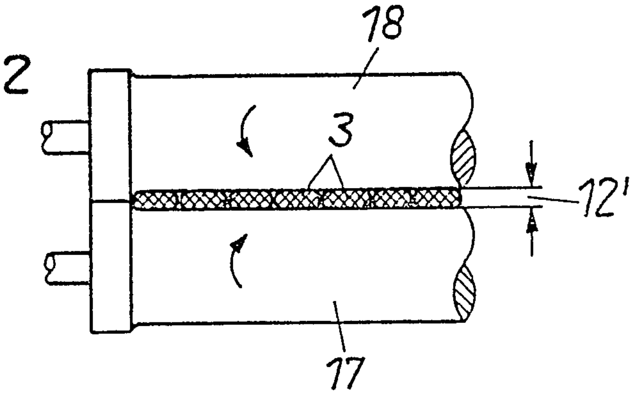


Fig. 3